# EUROPEAN PATENT APPLICATION

(11) **EP 4 357 984 A1**
(43) Date of publication of application: **24.04.2024**
(21) Application number: 23204401.6
(22) Date of filing: 18.10.2023
(51) Int. Cl.: G06N 3/086, G06N 3/0985, G06N 3/045, G06N 3/0464

(54) **CONSTRAINED SEARCH: IMPROVE MULTI-OBJECTIVE NAS QUALITY BY FOCUS ON DEMAND**

(30) Priority: 20.10.2022 US 202263380249 P; 06.10.2023 US 202318482211
(71) Applicant: MediaTek Inc., 30078 Hsinchu City (TW)
(72) Inventor: TSAI, Yun-Chan, Hsinchu City 30078 (TW); HORNG, Min-Fong, Hsinchu City 30078 (TW); LIU, Chia-Hsiang, Hsinchu City 30078 (TW); CHAN, Cheng-Sheng, Hsinchu City 30078 (TW); HUNG, Sheng-Je, Hsinchu City 30078 (TW)
(74) Representative: Hoefer & Partner Patentanwälte mbB

(57) **Abstract**

Aspects of the disclosure provide an evolutionary neural architecture search, ENAS, method. For example, the ENAS method can include steps (a) performing one or more evolutionary operations on an initial population of neural architectures to generate offspring neural architectures (121), (b) evaluating performance of each of the offspring neural architectures to obtain at least one evaluation value of the offspring neural architecture with respect to a performance metric (122), (c) adjusting the evaluation values of the offspring neural architectures based on at least one constraint on the evaluation values (525, 526), (d) selecting at least one of the offspring neural architectures as a new population of neural architectures (123), and (e) outputting the new population of neural architectures as a last population of neural architectures when a stopping criterion is achieved (124), or (f) iterating steps (a) to (d) with the new population of neural architectures being taken as the initial population of neural architectures.

## Description

### CROSS-REFERENCE TO RELATED APPLICATIONS

This present disclosure claims the benefit of U.S. Provisional Application No. 63/380,249, "Constrained Search: Improve Multi-Objective NAS Quality by Focus on Demand" filed on October 20, 2022, which is incorporated herein by reference in its entirety.

### TECHNICAL FIELD

The present disclosure relates to neural architecture search (NAS), and, more particularly, to methods that introduce model requirement or preference into NAS searching stage to yield better quality of Pareto front.

### BACKGROUND

The background description provided herein is for the purpose of generally presenting the context of the disclosure. Work of the presently named inventors, to the extent the work is described in this background section, as well as aspects of the description that may not otherwise qualify as prior art at the time of filing, are neither expressly nor impliedly admitted as prior art against the present disclosure.

In recent years, artificial intelligence (AI) models, such as machine learning (ML) models, deep learning (DL) models, neural network (NN) models, *etc.,* have increased in popularity. As the use of AI models expands, the availability of different neural architectures for implementing AI models has greatly increased. Given the expensiveness of manual implementation, neural architecture search (NAS) that can automatically search the architecture design becomes a popular approach.

### SUMMARY

An evolutionary neural architecture search method, an apparatus, and a non-transitory machine-readable storage medium according to the invention are defined in the independent claims. The dependent claims define preferred embodiments thereof. Aspects of the disclosure provide an evolutionary neural architecture search (ENAS) method. For example, the ENAS method can include the following steps of: (a) performing one or more evolutionary operations on an initial population of neural architectures to generate offspring neural architectures; (b) evaluating performance of each of the offspring neural architectures to obtain at least one evaluation value of the offspring neural architecture with respect to a performance metric; (c) adjusting the evaluation values of the offspring neural architectures based on at least one constraint on the evaluation values; (d) selecting at least one of the offspring neural architectures as a new population of neural architectures using a selection strategy; (e) outputting the new population of neural architectures as a last population of neural architectures when a stopping criterion is achieved; and (f) iterating steps (a) to (d) with the new population of neural architectures being taken as the initial population of neural architectures when the stopping criterion is not achieved yet.

Preferably, adjusting the evaluation values of the neural architectures can include at least one of performing a clip algorithm to apply an enough-bound on the evaluation values of the offspring neural architectures and performing an extinct algorithm to apply a must-bound on the evaluation values of the offspring neural architectures. For example, at least one of the enough-bound and the must-bound can be constant for every iteration of steps (a) to (d). As another example, at least one of the enough-bound and the must-bound can vary for at least two consecutive iterations of steps (a) to (d). Preferably, the at least one of the enough-bound and the must-bound can gradually increase as steps (a) to (d) iterate. For example, the must-bound can gradually increase as steps (a) to (d) iterate. As another example, the enough-bound can gradually increase as steps (a) to (d) iterate.

Preferably, the evolutionary operations can include at least one of crossover and mutation. Preferably, the selection strategy can include one of non-dominated soring, elitism, discarding the worst, roulette wheel selection and tournament selection.

Aspects of the present disclosure further provide an apparatus. For example, the apparatus can include circuitry, the circuitry configured to perform an evolutionary neural architecture search (ENAS) method, the ENAS method can include comprising the following steps of: (a) performing one or more evolutionary operations on an initial population of neural architectures to generate offspring neural architectures; (b) evaluating performance of each of the offspring neural architectures to obtain at least one evaluation value of the offspring neural architecture with respect to a performance metric; (c) adjusting the evaluation values of the offspring neural architectures based on at least one constraint on the evaluation values; (d) selecting at least one of the offspring neural architectures as a new population of neural architectures using a selection strategy; (e) outputting the new population of neural architectures as a last population of neural architectures when a stopping criterion is achieved; and (f) iterating steps (a) to (d) with the new population of neural architectures being taken as the initial population of neural architectures when the stopping criterion is not achieved yet.

Aspects of the present disclosure further provide a non-transitory machine-readable storage medium. For example, the non-transitory machine-readable storage medium can stores instructions which, when executed by a processor, causes the processor to execute an evolutionary neural architecture search (ENAS) method, the ENAS method including the following steps of: (a) performing one or more evolutionary operations on an initial population of neural architectures to generate offspring neural architectures; (b) evaluating performance of each of the offspring neural architectures to obtain at least one evaluation value of the offspring neural architecture with respect to a performance metric; (c) adjusting the evaluation values of the offspring neural architectures based on at least one constraint on the evaluation values; (d) selecting at least one of the offspring neural architectures as a new population of neural architectures using a selection strategy; (e) outputting the new population of neural architectures as a last population of neural architectures when a stopping criterion is achieved; and (f) iterating steps (a) to (d) with the new population of neural architectures being taken as the initial population of neural architectures when the stopping criterion is not achieved yet.

### BRIEF DESCRIPTION OF THE DRAWINGS

Various embodiments of this disclosure that are proposed as examples will be described in detail with reference to the following figures, wherein like numerals reference like elements, and wherein:
FIG. 1 is a flowchart of an evolutionary neural architecture search (ENAS) method;
FIGs. 2A and 2B show NAS results with respect to two and three performance metrics, respectively;
FIG. 3 illustrates a clip algorithm that adjusts evaluation values of candidate neural architectures according to some embodiments of the present disclosure;
FIG. 4 illustrates an extinct algorithm that adjusts evaluation values of candidate neural architectures according to some embodiments of the present disclosure;
FIG. 5 is a flowchart of an ENAS method according to some embodiments of the present disclosure;
FIG. 6 illustrates an application and simulation example of an ENAS method that introduces a clip algorithm and an extinct algorithm to apply enough-bound and must-bound, respectively, on candidate neural architectures according to some embodiments of the present disclosure;
FIG. 7 is a flowchart of another ENAS method according to some embodiments of the present disclosure;
FIG. 8 is a flowchart of yet another ENAS method according to some embodiments of the present disclosure; and
FIG. 9 is a functional block diagram of an apparatus that includes circuitry configured to perform an ENAS method according to some embodiments of the present disclosure.

### DETAILED DESCRIPTION OF EMBODIMENTS

Recent advancements in deep learning (DL), *e.g.,* deep neural networks (DNNs), bring lots of demands for neural architecture design. DNN models, *e.g.,* convolutional neural networks (CNN), can be used to solve various computer vision tasks, such as image classification, semantic segmentation, object detection, *etc.* These efficient CNN models were manually designed by human experts. Given the expensiveness of manual design, neural architecture search (NAS) that can automatically search the neural architecture becomes a popular approach. NAS aims to design neural architectures with excellent performance using constrained computer resources in an automatic manner without much human involvement.

In general, NAS algorithms (or methods) can be classified into three categories, based on the optimizers (or search strategies) they employ: reinforcement learning (RL), gradient, and evolutionary computation (EC). RL-based NAS algorithms use a recurrent neural network (RNN), for example, to sample the representation of neural architecture, and then adopt reinforcement learning to constantly adjust the neural architectures. RL-based NAS algorithms may require as many as thousands of graphics processing units (GPUs) performing several days. Gradient-based NAS algorithms continuously relax the previously discrete search space, allowing efficient search of neural architecture using the gradient descent strategy. Gradient-based NAS algorithms, though significantly improving the search efficiency as compared with RL-based NAS algorithms, often end up finding ill-conditioned NAS neural architectures due to the improper relation for adapting to gradient-based optimization. EC-based NAS (ENAS) algorithms address the NAS by exploiting EC techniques, which simulate the evolution of species or the behaviors of the population in nature, *e.g.,* crossover, mutation, *etc.,* in order to search for the optimal neural architecture of DNN models by using EC techniques.

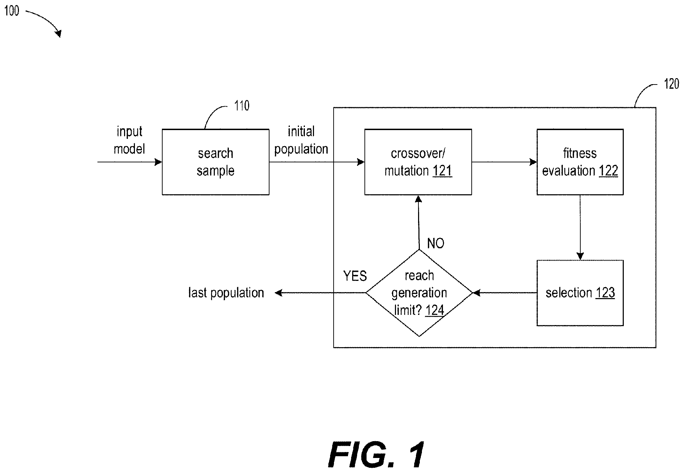

FIG. 1 illustrates a flowchart of an ENAS method 100 that performs a populating updating process. The ENAS method100 includes an initial space (or stage) 110 and a search space (or stage) 120. In the initial space 110, a population is defined or sampled in advance, each individual in which can represent a candidate model for the ENAS, *i.e*., a DNN model. For example, the population in the initial space 110 can be initialized from trivial initial conditions or randomly initialized in an encoding space. Optionally, the fitness of the individuals can be evaluated based on a certain evaluation criterion. Lastly, after each individual in the population is evaluated, initial population for the search space 120 is generated, each of which has been evaluated exceeding the evaluation criterion and is defined as a neural architecture a NAS approach might discover. The search space 120 can also be reduced by incorporating prior knowledge about typical properties of neural architectures well-suited for a task (*e.g*., rich initialization), forming a well-designed search space.

In the search space 120, at least one DNN model can be sampled from the initial population in every evolution step and serve as a parent to generate offsprings by performing evolutionary operations, *e.g.,* crossover, mutation, *etc.,* at step 121. For example, crossover can include swapping some of the hyperparameters (*e.g*., the number of channels) of two layers of the DNN model. As another example, mutation can include adding or removing a layer, changing the hyperparameters (*e.g*., the number of channels) of a layer, adding skip connections, as well as changing training hyperparameters of the DNN model.

The ENAS method 100 aims to find a neural architecture that maximizes some performance measure, such as accuracy (measured based on peak signal-to-noise ratio (PSNR), for example), latency, power consumption, memory requirement, operating speed, operating cycle, *etc.* Therefore, in the search space 120, the generated offsprings are evaluated to determine their performance, at step 122. For example, the offsprings, *e.g.,* DNN models, can be trained on training data and their performance can be evaluated on validation data.

Then, the offsprings are selected, at step 123. For example, the selection strategies used at step 123 can include elitism (retaining the individuals with higher fitness values), discarding the worst (removing the individuals with poor fitness values from the population), roulette wheel selection (giving every individual a probability according to its fitness value among the population to survive or be discarded, regardless it is the best or not), tournament selection (selecting the best one from an equally likely sampling of individuals), *etc.*

Lastly, whether a stopping criterion of the population updating process is achieved is determined, at step 124. For example, if the generation of offsprings generated has not reached a generation limit yet, steps 121 to 123 can be executed sequentially again; otherwise, the population updating process of the ENAS method 100 ends and the last population is generated.

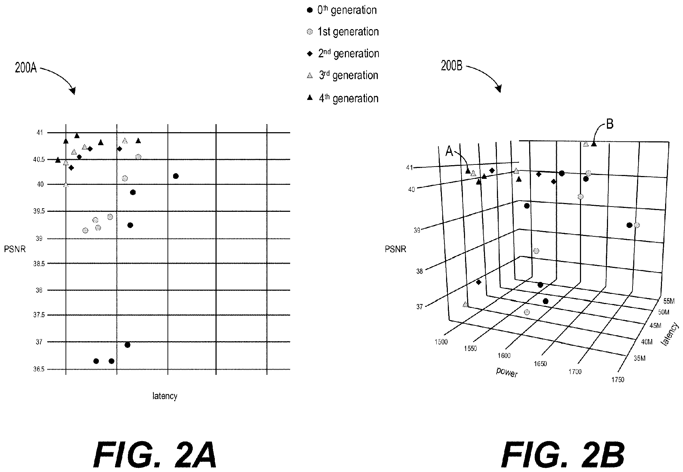

Traditionally, NAS is formulated as a single-objective optimization progress (*e.g*., accuracy) with the goal of finding a neural architecture that has minimal validation error, for example. To deploy AI application on hardware, AI models need to be evaluated by more than its accuracy performance. For example, latency, power consumption and other hardware-metrics also need to be taken into consideration, which makes NAS become a multi-objective optimization progress. Multi-objective NAS does not solely aim to minimize the validation error, but simultaneously optimize multiple objectives, *e.g.,* accuracy, latency, power consumption and memory requirement. There is no neural architecture that can minimize all objectives at the same time since they compete with each other typically. Rather, there are multiple Pareto optimal neural architectures reflecting different trade-offs in objectives approximating the true (unknown) Pareto front. For example, a cost function can be customized to bring the multi-objective problem to a single-objective problem. However, such a cost function demonstrates poor generalizability, and a dedicated cost function may be needed for each application. Further, DNN models thus searched may become sparser when the number of objectives increases, and, thus, multi-objective NAS may lead to extremely diversified solutions and cause only a small portion of models can meet the predefined requirements. For example, as shown in FIGs. 2A and 2B, the candidate DNN models of the fourth generation are sparser in a three-objective NAS 200B (*e.g*., PSNR, power consumption and latency) than in a two-objective NAS 200A (*e.g*., PSNR and latency), and models A and B are extremely diversified though they may have similar cost function values. Accordingly, lots of searching resources may be wasted on unqualified models which results in inadequate quantity and quality of qualified candidate models.

Aspects of the present disclosure provide methods that introduce model requirement or preference into NAS searching stage to yield better quality of Pareto front. Therefore, NAS searching objective space, *e.g.,* the search space 120, can be applied with constraints and only focus on the potentially qualified candidate models. Preferably, must-bound and enough-bound can be introduced into multi-objective NAS. For example, if a model is worse than the must-bound, it is counted as unqualified and should not be in the final candidate model list. As another example, if a model is better than the enough-bound, not extra credit is grated to it and is has a predefined evaluation value with respect to the enough-bound.

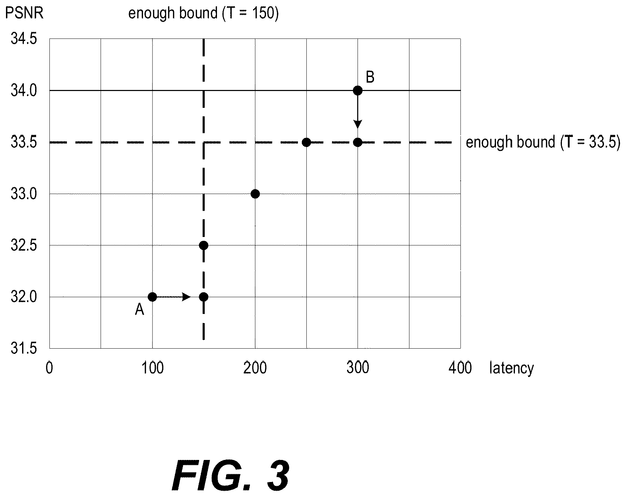

Aspects of the present disclosure introduce a clip algorithm (Clip (x)) and an extinct algorithm (Extinct (x)) to apply the enough-bound and the must-bound, respectively, on the evolved models. For example, the clip algorithm can adjust and determine the evaluation value of a model based on a clip condition. In an embodiment, Clip (x) = x if x > T (*i.e*., enough-bound, a minimum requirement); otherwise = T if x ≤ T, if x represents the evaluation value of latency, for example, which means that no extra credit (*e.g*., less latency than the enough-bound) will be given for the models that are better than the enough-bound (T) during a selection step, *e.g.,* selection at step 123 (shown in FIG. 1). Thus, NAS can be avoided focusing on invalid optimization directions. For example, as shown in FIG. 3, the enough-bound (T) for the latency index of any candidate model is 150, and the evaluation value of a model A with respect to latency is clipped to 150 according to Clip_{latency} (x) = 150 because 100 ≤ 150, even though it has the less latency of 100 than the enough-bound (T) of 150. In another embodiment, Clip (x) = x if x ≤ T (*i.e*., enough-bound, a maximum limitation); otherwise = T if x > T, if x represents the evaluation value of PSNR, for example, which also means that no extra credit (*e.g*., greater PSNR than the enough-bound) will be given for the models that are better than the enough-bound (T) during a selection step, *e.g.,* selection at step 123 (shown in FIG. 1). Similarly, NAS can thus be avoided focusing on invalid optimization directions. For example, also as shown in FIG. 3, the enough-bound (T) for the PSNR index of any candidate model is 33.5, and the evaluation value of a model B with respect to PSNR is clipped to 33.5 according to Clip_{PSNR} (x) = 33.5 because 34 > 33.5, even though it has the greater PSNR of 34.0 than the enough-bound (T) of 33.5.

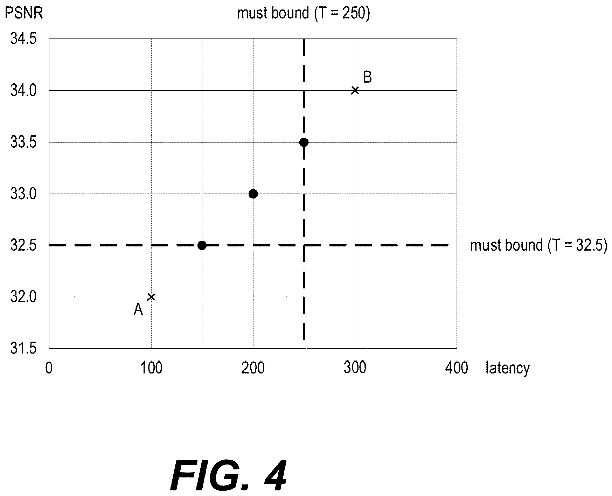

For example, the extinct algorithm can adjust and determine the evaluation value of a model based on an extinct condition. In an embodiment, Extinct (x) = 0 if x < T (*i.e*., must-bound, a minimum requirement); otherwise = x if x ≥ T, if x represents the evaluation value of PSNR, for example, which means that the evaluation value of such the models, which are worse than the must-bound (T), will be reduced to zero (or a low enough value that can be determined as to whether it is less than a threshold definitely) and the model will be discard from the population during a selection step, *e.g.,* selection at step 123 (shown in FIG. 1). Thus, NAS can be avoided focusing on invalid optimization directions. For example, as shown in FIG. 4, the must-bound (T) for the PSNR index of any candidate model is 32.5, the evaluation value of a model A with respect to PSNR is reduced to zero according to Extinct_{PSNR} (x) = 0 because 32.0 < 32.5, even though it has non-zero PSNR of 32, and the model A will be discarded from the population during a selection step as the evaluation value of the model A does not attain the minimum requirement of the must-bound. In another embodiment, Extinct (x) = x if x ≤ T (*i.e*., must-bound, a maximum limitation); otherwise = ∞ if x > T, if x represents the evaluation value of latency, for example, which means that the evaluation value of such the models, which are worse than the must-bound (T), will be increased to infinity and the model will be discard from the population during a selection step, *e.g.,* selection at step 123 (shown in FIG. 1). Thus, NAS can be avoided focusing on invalid optimization directions. For example, also as shown in FIG. 4, the must-bound (T) for the latency index of any candidate model is 250, the evaluation value of a model B with respect to latency is increased to infinity according to Extinct_{latency} (x) = ∞ (or a very large value) because 300 > 250, even though it does not have too large the latency of 300, and the model B will be discarded from the population during a selection step as the evaluation value of the model A exceeds the maximum limitation of the must-bound.

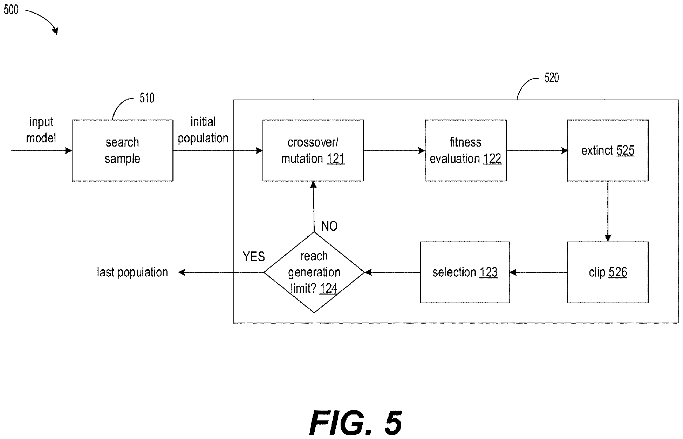

FIG. 5 illustrates a flowchart of an ENAS method 500 that performs a populating updating process according to some embodiments of the present disclosure. Preferably, the ENAS method 500 can include an initial space (or stage) 510 and a search space (or stage) 520. The ENAS method 500 introduces model requirement or preference into NAS searching stage to yield better quality of Pareto front. Therefore, NAS searching objective space, *e.g.,* the search space 520, can be applied with constraints, *e.g*., must-bound and enough-bound, and only focus on the potentially qualified candidate models. Preferably, the initial space 510 can include the initial space 110. Preferably, the search space 520 of the ENAS method 500 can differ from the search space 120 of the ENAS method 100 in that the search space 520 further includes an extinct step 525 and a clip step 526, in addition to the evolution step 121, the evaluation step 122, the selection step 123 and the stopping criterion step 124. In various embodiments, some of the steps of the ENAS method 500 shown can be performed concurrently or in a different order than shown, can be substituted by other method steps, or can be omitted. Additional method steps can also be performed as desired.

In the ENAS method 500, the initial population generated in the initial space 510 are input to the search space 520, evolutionary operations, *e.g.,* crossover, mutation, *etc.,* are performed on the parent population at step 121 to generate offsprings, and the offsprings generated at step 121 are evaluated to determine their performance at step 122, *e.g.,* evaluation values of a model. Then, the ENAS method 500 can proceed to step 525.

At step 525, an extinct algorithm (Extinct (x)) is used to adjust and determine at least one of the evaluation values of the model based on an extinct condition. For example, Extinct (x) = 0 if x < T (*i.e*., must-bound); otherwise = x if x ≥ T, if x represents the evaluation value of PSNR or operating speed, for example, which means that the evaluation value of such the models, which are worse than the must-bound (T), will be reduced to zero (or a small enough value) and the model will be discard from the population during a selection step, *e.g.,* selection at step 123. As another example, Extinct (x) = x if x ≤ T *(i.e.,* must-bound); otherwise = ∞ (or a very large value) if x > T, if x represents the evaluation value of latency, power consumption, memory requirement or operating cycle, for example, which means that the evaluation value of such the models, which are worse than the must-bound (T), will be increased to infinity and the model will be discard from the population during a selection step, e.g., selection at step 123. Then, the ENAS method 500 can proceed to step 526.

At step 526, a clip algorithm (Clip (x)) is used to determine at least one of the evaluation values of the model based on a clip condition. For example, Clip (x) = x if x > T (*i.e*., enough-bound); otherwise = T if x ≤ T, if x represents the evaluation value of latency, power consumption, memory requirement or operating cycle, for example, which means that no extra credit (*e.g*., less latency, power consumption, memory requirement or operating cycle than the evaluation value) will be given for the models that are better than the enough-bound (T) during a selection step, *e.g.,* selection at step 123. As another example, Clip (x) = x if x ≤ T (*i.e*., enough-bound); otherwise = T if x > T, if x represents the evaluation value of PSNR or operating speed, for example, which also means that no extra credit (*e.g*., greater PSNR or operating speed than the enough-bound) will be given for the models that are better than the enough-bound (T) during a selection step, *e.g.,* selection at step 123. Then, the ENAS method 500 can proceed to step 123.

At step 123, the offsprings with at least one of the evaluation values being clipped (*i.e.,* no greater or less than the enough-bound, depending on the clip condition), are selected, none of which have greater or less evaluation values than the must-bound, depending on the extinct condition. Preferably, the selection strategies used at step 123 can include elitism, discarding the worst, roulette wheel selection, tournament selection, non-dominated soring, *etc.*

Then, the ENAS method 500 can proceed to step 124, at which whether a stopping criterion of the population updating process is achieved is determined. For example, if the generation of offsprings generated has not reached a generation limit yet, steps 121 to 123 can be executed sequentially again; otherwise, the population updating process of the ENAS method 500 ends and the last population is generated.

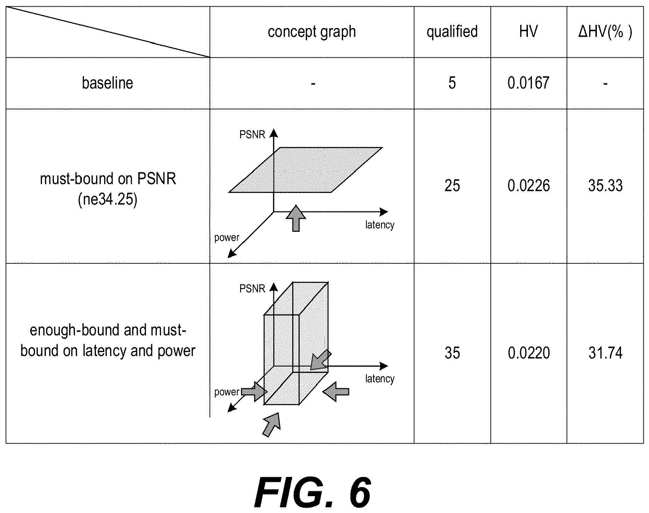

FIG. 6 illustrates an application and simulation example of an ENAS method that introduces must-bound and/or enough-bound, *e.g.,* the ENAS method 500, according to some embodiments of the present disclosure. For example, the ENAS method is used for super-resolution (SR) models to maximize PSNR (must-bound) and minimize latency and power of the SR models (must-bound and enough-bound, respectively). Preferably, a must-bound (*e.g.*, 34.25) is on PSNR, and enough-bounds are on latency and power. As shown in FIG. 6, the baseline, which does not introduce any constraints, finds only 5 candidate models and its hypervolume (HV) (a metric that determines the quality of Pareto front) is only 0.0167. By contrast, the must-bound on PSNR finds as many as 25 candidate models and its HV achieves 0.0226, 35.33% greater than 0.0167, and the must-bound on PSNR and enough-bound and must-bound on latency and power, respectively, finds as many as 35 candidate models and its HV achieves 0.0220, 31.74% greater than 0.0167.

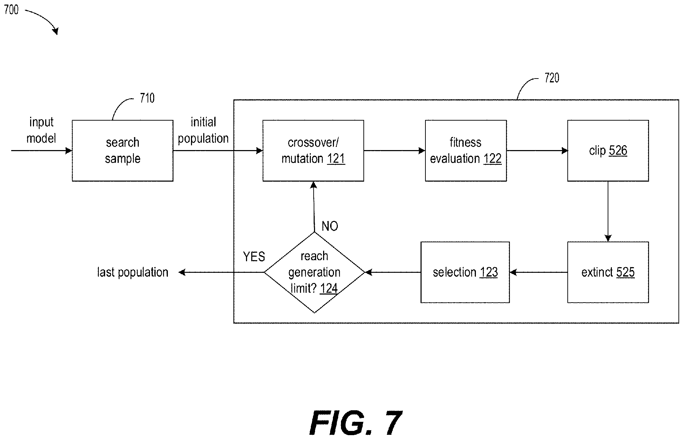

FIG. 7 illustrates a flowchart of an ENAS method 700 that performs a populating updating process according to some embodiments of the present disclosure. Preferably, the ENAS method 700 can include an initial space (or stage) 710 and a search space (or stage) 720. The ENAS method 700 introduces model requirement or preference into NAS searching stage to yield better quality of Pareto front. Preferably, the initial space 710 can include the initial space 110. Preferably, the search space 720 of the ENAS method 700 can differ from the search space 520 of the ENAS method 500 in that in the search space 720 step 525 and step 526 are executed in a reverse order from step 525 and step 526 executed in the search space 520. For example, in the search space 720 a clip algorithm (Clip (x)) can be first used to adjust and determine at least one of the evaluation values of the model based on a clip condition at step 526, and an extinct algorithm (Extinct (x)) can then be used to adjust and determine at least one of the remaining evaluation values of the model based on an extinct condition at step 525. In various embodiments, some of the steps of the ENAS method 700 shown can be performed concurrently or in a different order than shown, can be substituted by other method steps, or can be omitted. Additional method steps can also be performed as desired.

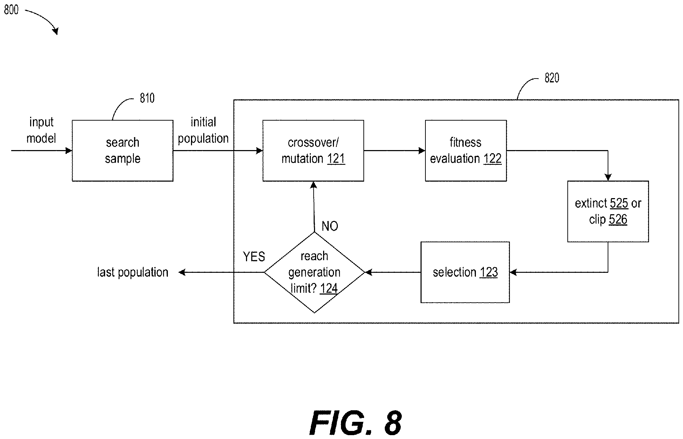

FIG. 8 illustrates a flowchart of an ENAS method 800 that performs a populating updating process according to some embodiments of the present disclosure. Preferably, the ENAS method 800 can include an initial space (or stage) 810 and a search space (or stage) 820. The ENAS method 800 introduces model requirement or preference into NAS searching stage to yield better quality of Pareto front. Preferably, the initial space 810 can include the initial space 110. Preferably, the search space 820 of the ENAS method 800 can differ from the search space 520 of the ENAS method 500 and the search space 720 of the ENAS method 700 in that the search space 820 includes only one of step 525 and step 526. For example, if the search space 820 includes step 525 only, the ENAS method 800 uses an extinct algorithm (Extinct (x)) at step 525 to adjust and determine at least one of the evaluation values of the model based on an extinct condition. Preferably, if the search space 820 includes step 526 only, the ENAS method 800 uses a clip algorithm (Clip (x)) at step 526 to adjust and determine at least one of the evaluation values of the model based on a clip condition.

Preferably, the extinct condition at step 525 and the clip condition at step 526 are static, and the must-bound and the enough-bound used by an extinct algorithm (Extinct (x)) and a clip algorithm (Clip (x)), respectively, are constant for every evolutionary iteration of the ENAS methods 500, 700 and 800. Alternatively preferably, at least one of the extinct condition and the clip condition can be dynamic, and the must-bound and the enough-bound used by an extinct algorithm (Extinct (x)) and a clip algorithm (Clip (x)), respectively, can vary during the evolutionary iteration of an ENAS method according to some embodiments of the present disclosure, *e.g.,* the ENAS methods 500, 700 and 800. Preferably, the must-bound can be increased gradually for every, every other, *etc.* evolutionary iteration.

For example, the must-bound used during the first evolutionary iteration of the ENAS method can be increased to must-bound × a ratio R (*e.g*., greater than one) that is used during the second evolutionary iteration of the ENAS method, the must-bound × the ratio R used during the second evolutionary iteration of the ENAS method can be increased to the must-bound × (the ratio R)² that is used during the third evolutionary iteration of the ENAS method, ..., and the must-bound × (the ratio R) ^{(generation limit-2)} used during the second to last evolutionary iteration of the ENAS method can be increased to the must-bound × (the ratio R) ^{(generation limit-1)} that is used during the last evolutionary iteration of the ENAS method. Therefore, more candidate models can be retained for every evolutionary iteration of such ENAS method, as compared to the candidate models retained for every evolutionary iteration of an ENAS method that uses a constant must-bound = the must-bound × (the ratio R)^{(generation limit-1)}.

As another example, the enough-bound used during the first evolutionary iteration of the ENAS method can be increased to clip-bound × a ratio R (*e.g*., greater than one) that is used during the second evolutionary iteration of the ENAS method, the enough-bound × the ratio R used during the second evolutionary iteration of the ENAS method can be increased to the must-bound × (the ratio R)² that is used during the third evolutionary iteration of the ENAS method, ..., and the enough-bound × (the ratio R) ^{(generation limit-2)} used during the second to last evolutionary iteration of the ENAS method can be increased to the enough-bound × (the ratio R) ^{(generation limit-1)} that is used during the last evolutionary iteration of the ENAS method.

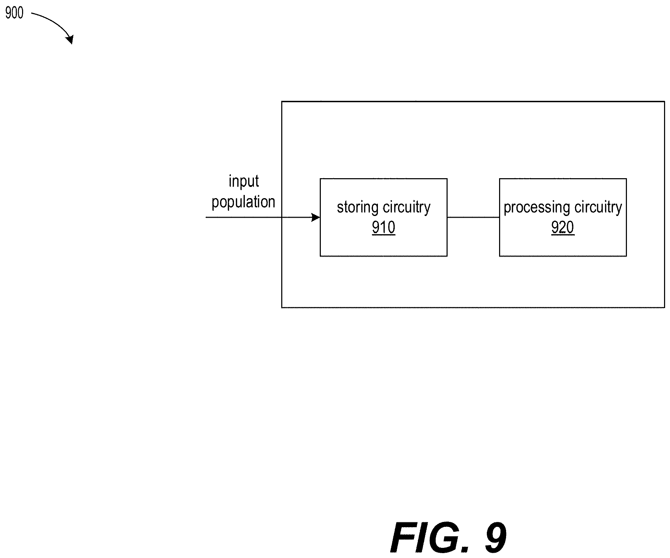

FIG. 9 is a functional block diagram of an apparatus 900. For example, the apparatus 900 can include circuitry, *e.g*., storing circuitry 910 and processing circuitry 920, that is configured to perform an ENAS method, e.g., the ENAS methods 500, 700 and 800. Preferably, the ENAS method can include the following steps of: (a) performing one or more evolutionary operations on an initial population of neural architectures to generate offspring neural architectures; (b) evaluating performance of each of the offspring neural architectures to obtain at least one evaluation value of the offspring neural architecture with respect to a performance metric; (c) adjusting the evaluation values of the offspring neural architectures based on at least one constraint on the evaluation values; (d) selecting at least one of the offspring neural architectures as a new population of neural architectures using a selection strategy; (e) outputting the new population of neural architectures as a last population of neural architectures when a stopping criterion is achieved; and (f) iterating steps (a) to (d) with the new population of neural architectures being taken as the initial population of neural architectures when the stopping criterion is not achieved yet.

Preferably, adjusting the evaluation values of the neural architectures can include at least one of performing a clip algorithm to apply an enough-bound on the evaluation values of the offspring neural architectures and performing an extinct algorithm to apply a must-bound on the evaluation values of the offspring neural architectures. For example, at least one of the enough-bound and the must-bound can be constant for every iteration of steps (a) to (d). As another example, at least one of the enough-bound and the must-bound can vary for at least two consecutive iterations of steps (a) to (d). Preferably, the at least one of the enough-bound and the must-bound can gradually increase as steps (a) to (d) iterate. For example, the must-bound can gradually increase as steps (a) to (d) iterate. As another example, the enough-bound can gradually increase as steps (a) to (d) iterate.

Preferably, the evolutionary operations can include at least one of crossover and mutation. Preferably, the selection strategy can include one of non-dominated soring, elitism, discarding the worst, roulette wheel selection and tournament selection.

Aspects of the present disclosure further provide a non-transitory machine-readable storage medium. For example, the non-transitory machine-readable storage medium can stores instructions which, when executed by a processor, causes the processor to execute an evolutionary neural architecture search (ENAS) method, the ENAS method including the following steps of: (a) performing one or more evolutionary operations on an initial population of neural architectures to generate offspring neural architectures; (b) evaluating performance of each of the offspring neural architectures to obtain at least one evaluation value of the offspring neural architecture with respect to a performance metric; (c) adjusting the evaluation values of the offspring neural architectures based on at least one constraint on the evaluation values; (d) selecting at least one of the offspring neural architectures as a new population of neural architectures using a selection strategy; (e) outputting the new population of neural architectures as a last population of neural architectures when a stopping criterion is achieved; and (f) iterating steps (a) to (d) with the new population of neural architectures being taken as the initial population of neural architectures when the stopping criterion is not achieved yet.

In the context of the present disclosure, the term "non-transitory," as used herein, is a limitation of the medium itself (*i.e.,* tangible, not a signal) as opposed to a limitation on data storage persistency (*e.g.*, RAM vs. ROM)." Preferably, the non-transitory machine-readable storage medium may be any tangible medium that may contain or store a program for use by or in connection with an instruction execution system, apparatus, or device. The machine-readable storage medium may be a machine-readable signal medium or a machine-readable storage medium. A machine-readable medium may include but not limited to an electronic, magnetic, optical, electromagnetic, infrared, or semiconductor system, apparatus, or device, or any suitable combination of the foregoing. More specific examples of the machine-readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

The processes and functions described herein can be implemented as a computer program which, when executed by one or more processors, can cause the one or more processors to perform the respective processes and functions. The computer program may be stored or distributed on a suitable medium, such as an optical storage medium or a solid-state medium supplied together with, or as part of, other hardware. The computer program may also be distributed in other forms, such as via the Internet or other wired or wireless telecommunication systems. For example, the computer program can be obtained and loaded into an apparatus, including obtaining the computer program through physical medium or distributed system, including, for example, from a server connected to the Internet.

The computer program may be accessible from a computer-readable medium providing program instructions for use by or in connection with a computer or any instruction execution system. The computer readable medium may include any apparatus that stores, communicates, propagates, or transports the computer program for use by or in connection with an instruction execution system, apparatus, or device. The computer-readable medium can be magnetic, optical, electronic, electromagnetic, infrared, or semiconductor system (or apparatus or device) or a propagation medium. The computer-readable medium may include a computer-readable non-transitory storage medium such as a semiconductor or solid state memory, magnetic tape, a removable computer diskette, a random access memory (RAM), a read-only memory (ROM), a magnetic disk and an optical disk, and the like. The computer-readable non-transitory storage medium can include all types of computer readable medium, including magnetic storage medium, optical storage medium, flash medium, and solid state storage medium.

While aspects of the present disclosure have been described in conjunction with the specific embodiments thereof that are proposed as examples, alternatives, modifications, and variations to the examples may be made. Accordingly, embodiments as set forth herein are intended to be illustrative and not limiting. There are changes that may be made without departing from the scope of the claims set forth below.

## Claims

1. An evolutionary neural architecture search, in the following also referred to as ENAS, method, comprising the following steps of:
(a) performing one or more evolutionary operations on an initial population of neural architectures to generate offspring neural architectures (121);
(b) evaluating performance of each of the offspring neural architectures to obtain at least one evaluation value of the offspring neural architecture with respect to a performance metric (122);
(c) adjusting the evaluation values of the offspring neural architectures based on at least one constraint on the evaluation values (525, 526);
(d) selecting at least one of the offspring neural architectures as a new population of neural architectures using a selection strategy (123);
(e) outputting the new population of neural architectures as a last population of neural architectures when a stopping criterion is achieved (124); and
(f) iterating steps (a) to (d) with the new population of neural architectures being taken as the initial population of neural architectures when the stopping criterion is not achieved yet.

2. The ENAS method of claim 1, wherein adjusting the evaluation values of the neural architectures includes at least one of performing a clip algorithm (526) to apply an enough-bound on the evaluation values of the offspring neural architectures and performing an extinct algorithm (525) to apply a must-bound on the evaluation values of the offspring neural architectures.

3. The ENAS method of claim 2, wherein at least one of the enough-bound and the must-bound is constant for every iteration of steps (a) to (d).

4. The ENAS method of claim 2, wherein at least one of the enough-bound and the must-bound varies for at least two consecutive iterations of steps (a) to (d).

5. The ENAS method of claim 4, wherein the at least one of the enough-bound and the must-bound increases gradually as steps (a) to (d) iterate.

6. The ENAS method of claim 5, wherein the must-bound increases gradually as steps (a) to (d) iterate.

7. The ENAS method of claim 5 or 6, wherein the enough-bound gradually increases as steps (a) to (d) iterate.

8. The ENAS method of any one of claims 1 to 7, wherein the evolutionary operations include at least one of crossover and mutation.

9. The ENAS method of any one of claims 1 to 8, wherein the selection strategy includes one of non-dominated soring, elitism, discarding the worst, roulette wheel selection and tournament selection.

10. An apparatus, comprising circuitry configured to perform an evolutionary neural architecture search, in the following also referred to as ENAS, method, the ENAS method including the steps as defined in any one of claims 1 to 9.

11. A non-transitory machine-readable storage medium, storing instructions which, when executed by a processor, causes the processor to execute an evolutionary neural architecture search, in the following also referred to as ENAS, method, the ENAS method comprising the steps as defined in any one of claims 1 to 9.
